# EUROPÄISCHE PATENTANMELDUNG

(11) **EP 3 196 501 A1**
(43) Veröffentlichungstag der Anmeldung: **26.07.2017**
(21) Anmeldenummer: 17151044.9
(22) Anmeldetag: 11.01.2017
(51) Int. Cl.: F16F 9/04, F16F 9/05

(54) **LUFTFEDER**

(30) Priorität: 20.01.2016 DE 102016100939
(71) Anmelder: Vibracoustic CV Air Springs GmbH, 20099 Hamburg (DE)
(72) Erfinder: Dehlwes, Stephan, 22844 Norderstedt (DE)
(74) Vertreter: Flügel Preissner Schober Seidel

(57) **Zusammenfassung**

Die vorliegende Erfindung betrifft eine Luftfeder (10), aufweisend einen Abrollkolben (12), einen Luftfederbalg (16) mit wenigstens einem endseitigen Wulstabschnitt (38) und einem Pufferelement (50), wobei der Abrollkolben (12) einen Befestigungsabschnitt (30) aufweist, wobei der Wulstabschnitt (38) an einer Außenseite (44) des Befestigungsabschnitts (30) anliegt, dadurch gekennzeichnet, dass das Pufferelement (50) mittels einer Rastverbindung an der Außenseite (44) des Befestigungsabschnitts (30) festgelegt ist.

## Beschreibung

Die vorliegende Erfindung betrifft eine Luftfeder, insbesondere eine Luftfeder für Nutzfahrzeuge.

Luftfedern der eingangs genannten Art werden dazu verwendet, um zwei zueinander bewegliche Fahrzeugteile abzufedern, oder die Niveaulage eines Fahrzeugs zu verändern. Bekannte Luftfedern weisen einen Luftfederbalg aus Gummi auf, der mit einem oberen Abschlusselement, zumeist in Form einer Platte, und einem Abrollkolben verbunden ist, um einen luftdicht abgeschlossenen Arbeitsraum zu bilden. Während einer Ein- und Ausfederung rollt der Luftfederbalg an der Außenfläche des Abrollkolbens ab und komprimiert die in dem Arbeitsraum eingeschlossene Luft. Dadurch wird ein Feder- und/oder Dämpfungseffekt erzielt.

Zur Befestigung des Luftfederbalgs an dem Abrollkolben ist es bekannt, den Luftfederbalg mit einem endseitigen Wulstabschnitt zu versehen, der auf einen Befestigungsabschnitt des Abrollkolbens aufgeschoben wird. Um ein Abziehen des Luftfederbalgs von dem Abrollkolben zu verhindern, sind unterschiedliche Maßnahmen bekannt.

So geht aus DE 694 07 244 T2 ein Abrollkolben hervor, dessen Befestigungsabschnitt aus einer abgerundeten Schulter, welche sich nach innen unten zu einem horizontalen Flansch neigt, und einem Wulstsitzbereich gebildet ist, der senkrecht zu dem Flansch verläuft, wobei ein Wulstabschnitt eines Luftfederbalgs an der Schulter und dem Wulstsitzbereich dichtend anliegt. Um ein Abziehen des Luftfederbalgs zu vermeiden, ist auf dem Abrollkolben eine Platte mit einer äußeren peripheren Kante angeordnet, die den Wulstabschnitt des Luftfederbalgs zum Bilden einer Wulstrückhaltelippe teilweise überdeckt.

Ferner ist es aus DE 10 2008 055 511 A1 bekannt, einen als Konussitz ausgebildeten Befestigungsabschnitt eines Abrollkolbens im oberen Bereich mit einer Haltenase zum Halten eines Wulstabschnitts eines Luftfederbalgs, und im unteren Bereich zwischen dem Konussitz und einer Schulter eine Vertiefung zur wenigstens teilweisen Aufnahme des Wulstabschnitts zu versehen.

Eine weitere Maßnahme zur Sicherung eines Wulstabschnitts vor einem Abziehen von dem Abrollkolben geht aus WO 2012/019805 A1 hervor. Hierzu ist in einem Befestigungsabschnitt eines Abrollkolbens eine ringförmige Nut eingebracht, in die ein Sperrring nach der Montage des Luftfederbalgs eingeclipst wird. Der Sperrring verhindert ein Abrutschen des Luftfederbalgs von dem Befestigungsabschnitt des Abrollkolbens.

Ferner ist es bekannt, den Abrollkolben auf einer dem Arbeitsraum zugewandten Seite mit einem Pufferelement zu versehen, das als Anschlag für den Abrollkolben am oberen Deckelelement dient, um so die Bewegung des Abrollkolbens in Axialrichtung begrenzt.

Aus US 2008/0246198 A1 geht eine Luftfeder mit einem Abrollkolben und einem Pufferelement hervor, das mittels einer radial innenliegenden Rastverbindung mit dem Abrollkolben verbunden ist. Hierzu ist an einer Innenseite eines am Abrollkolben ausgebildeten Befestigungsabschnitts eine radial einwärts abragende erste Rastnase vorgesehen, die mit einer zweiten Rastnase, die an einem mit dem Pufferelement verbundenen Befestigungsring angeordnet ist, zusammenwirkt.

Ferner geht aus WO 01/42678 A1 eine Luftfeder hervor, deren Abrollkolben mit einem Pufferelement versehen ist. Das Pufferelement verhindert zudem ein Abziehen eines Wulstabschnitts eines Luftfederbalgs von dem Abrollkolben, indem das Pufferelement einen Abschnitt des Wulstabschnitts teilweise überdeckt. Das Pufferelement ist mittels einer Rastverbindung mit dem Abrollkolben verbunden, indem in dem Abrollkolben ein Hinterschnitt ausgebildet ist, der mit einem am Pufferelement ausgebildeten Federelement zusammenwirkt. Dadurch ist der Abrollkolben aufwendig und teuer in der Herstellung.

Der Erfindung liegt die Aufgabe zugrunde, eine Luftfeder vorzuschlagen, deren Abrollkolben einfach und kostengünstig herstellbar ist und zudem eine einfache und sichere Befestigung eines Pufferelementes an dem Abrollkolben ermöglicht.

Zur Lösung der Aufgabe wird eine Luftfeder mit den Merkmalen nach Anspruch 1 vorgeschlagen.

Vorteilhafte Ausgestaltungen der Luftfeder sind Gegenstand der Unteransprüche.

Im Rahmen der Erfindung kann die Rastverbindung auch als Schnappverbindung oder lösbare Verbindung bezeichnet werden.

Es wird eine Luftfeder, insbesondere eine Luftfeder für ein Nutzfahrzeug, vorgeschlagen, die einen Abrollkolben, einen Luftfederbalg mit wenigstens einem endseitigen Wulstabschnitt und ein Pufferelement aufweist, wobei der Abrollkolben einen Befestigungsabschnitt aufweist, wobei der Wulstabschnitt an einer Außenseite des Befestigungsabschnitts anliegt. Das Pufferelement ist mittels einer Rastverbindung an der Außenseite des Befestigungsabschnitts festgelegt. Da die äußere Kontur des Befestigungsabschnitts zur Befestigung des Pufferelements genutzt wird, ist keine weitere Befestigungskontur am Abrollkolben erforderlich. Dadurch kann der Abrollkolben einfach und kostengünstig hergestellt werden. Zudem ermöglicht die Rastverbindung eine einfache und sichere Befestigung des Pufferelements an dem Abrollkolben.

In einer vorteilhaften Ausgestaltung weist der Befestigungsabschnitt eine erste Rasteinrichtung auf, die mit einer am Pufferelement ausgebildeten zweiten Rasteinrichtung zusammenwirkt. Dadurch wird eine einfache und kostengünstige Befestigung für das Pufferelement an dem Abrollkolben geschaffen. Vorteilhaft bilden die beiden Rasteinrichtungen die Rastverbindung. Weiterhin vorteilhaft sind die beiden Rasteinrichtungen derart ausgebildet, dass die Rastverbindung lösbar ist. Dadurch ist es möglich, das Pufferelement auszutauschen.

Vorteilhaft weist die erste Rasteinrichtung wenigstens eine von dem Befestigungsabschnitt radial abragende Rastnase auf. Da die Rastnase an der Außenseite des Befestigungsabschnittes, insbesondere an dessen äußerer Kontur, angeordnet ist, kann der Abrollkolben einfach, beispielsweise mittels Spritzgießen, hergestellt werden. Vorteilhaft ist die Rastnase umlaufend ausgebildet. Vorteilhaft ist die wenigstens eine Rastnase materialeinheitlich mit dem Befestigungsabschnitt verbunden. Ferner kann die erste Rasteinrichtung wenigstens zwei von dem Befestigungsabschnitt radial abragende Rastnasen aufweisen. Weiterhin kann der Befestigungsabschnitt eine Vielzahl an radial abragenden Rastnasen aufweisen, die in äquidistanten Abständen zueinander an der Außenseite angeordnet sind.

Vorteilhaft weist die zweite Rasteinrichtung wenigstens einen Vorsprung auf, der mit der ersten Rasteinrichtung zusammenwirkt. Der Vorsprung ragt vorteilhaft radial einwärts von dem Pufferelement ab, wobei im eingerasteten Zustand die erste Rasteinrichtung, insbesondere die wenigstens zwei Rastnasen der ersten Rasteinrichtung, den Vorsprung hintergreifen.

Vorteilhaft weist die zweite Rasteinrichtung eine Vielzahl an Vorsprüngen auf, die in äquidistanten Abständen an dem Pufferelement angeordnet sind. Durch eine Segmentierung der Vorsprünge am Pufferelement kann das Pufferelement kostengünstig ohne Hinterschnitt hergestellt werden.

In einer vorteilhaften Ausgestaltung liegt ein Abschnitt des Pufferelements im festgelegten Zustand an dem Wulstabschnitt an. Dadurch sichert das Pufferelement den Wulstabschnitt vor einem Abziehen von dem Abrollkolben. Vorteilhaft liegt die zweite Rasteinrichtung an dem Pufferelement an.

In einer vorteilhaften Ausgestaltung ist das Pufferelement in eine von dem Befestigungsabschnitt gebildete Öffnung eingesetzt, wobei ein Randabschnitt des Pufferelements den Befestigungsabschnitt außenumfangsseitig umgibt. Dadurch sichert das Pufferelement den Wulstabschnitt vor einem Abziehen von dem Abrollkolben.

In einer vorteilhaften Ausgestaltung weist der Randabschnitt die zweite Rasteinrichtung auf. Vorteilhaft liegt der Randabschnitt, insbesondere dessen freies Ende, im festgelegten Zustand an dem Wulstabschnitt an. Dadurch kann die äußere Kontur des Befestigungsabschnitts vom Abrollkolben zur Befestigung des Pufferelements genutzt werden, indem die von dem Randabschnitt radial einwärts abragenden Vorsprünge die von dem Befestigungsabschnitt radial auswärts abragenden Rastnasen hintergreifen. Vorteilhaft ist ein Abschnitt des Randabschnitts konisch ausgebildet, wobei die Vorsprünge von dem freien Ende des Randabschnitts radial einwärts abragen.

Vorteilhaft weist der Randabschnitt an seinem freien Ende eine Erhebung auf. Vorteilhaft liegt die Erhebung an dem Wulstabschnitt an. Weiterhin vorteilhaft ist die Erhebung als eine spitze Kontur ausgebildet. Dadurch kann ein Toleranzausgleich für das Pufferelement geschaffen werden.

Vorteilhaft ist der Befestigungsabschnitt als Konussitz ausgebildet. Der Konussitz dient als Klemmsitz beziehungsweise Stecksitz für den Wulstabschnitt, indem eine konisch geformte Dichtfläche des Wulstabschnitts an der Außenseite des Befestigungsabschnitts dichtend anliegt.

Vorteilhaft weist der Wulstabschnitt einen Wulstkern und eine konische Dichtfläche auf, wobei die konische Dichtfläche an der Außenseite des Befestigungsabschnitts dichtend anliegt. Vorteilhaft ist der Wulstkern in den Wulstabschnitt eingebettet. Weiterhin vorteilhaft ist der Wulstkern als ein zugfester Ringkörper ausgebildet und kann aus Stahl oder Stahldraht hergestellt sein. Der Wulstkern liegt unter dem Einfluss des Innendrucks des Luftfederbalgs am Befestigungsabschnitt dichtend an.

Der Abrollkolben kann einen zu dem Befestigungsabschnitt senkrecht verlaufenden Schulterabschnitt aufweisen, wobei der Wulstabschnitt an dem Schulterabschnitt anliegt.

Vorteilhaft ist der Abrollkolben einteilig ausgebildet und weist eine Versteifungsstruktur auf. Die Versteifungsstruktur kann eine Vielzahl an Versteifungsrippen aufweisen, die an einer Innenfläche des Abrollkolbens angeformt sind. In einer vorteilhaften Ausgestaltung sind die Versteifungsrippen als horizontale, vertikale und/oder kreisförmige Rippen ausgebildet, die in äquidistanten Abständen zueinander angeordnet sind. Durch die einteilige Ausgestaltung weist der Abrollkolben eine hohe Festigkeit sowie große Dichtheit auf.

Weiterhin vorteilhaft ist das Pufferelement einteilig ausgebildet und weist eine Versteifungseinrichtung auf. Die Versteifungseinrichtung kann eine Vielzahl an Rippen aufweisen, die an einer Innenfläche des Pufferelements angeformt sind. In vorteilhafter Ausgestaltung sind die Rippen als horizontale, vertikale und/oder kreisförmige Rippen ausgebildet, die in äquidistanten Abstand zueinander angeordnet sind. Durch die einteilige Ausgestaltung weist das Pufferelement eine hohe Festigkeit auf.

In einer vorteilhaften Ausgestaltung ist der Abrollkolben als Spritzgussteil, insbesondere Kunststoffspritzgussteil, hergestellt. Dadurch kann der Abrollkolben einfach und kostengünstig hergestellt werden. Bevorzugt ist der Abrollkolben aus einem Verbundwerkstoff, insbesondere aus Polyamid (PA) mit Glasfasern oder Polypropylen (PP) mit Glasfasern, hergestellt. Dadurch weist der Abrollkolben eine hohe Festigkeit und gleichzeitig ein niedriges Gewicht auf. Der Abrollkolben kann auch aus Metall, insbesondere Stahl oder Aluminium, hergestellt sein.

In einer vorteilhaften Ausgestaltung ist das Pufferelement als Spritzgussteil, insbesondere Kunststoffspritzgussteil, hergestellt. Das Pufferelement kann aus einem Verbundwerkstoff oder einem elastomeren Werkstoff hergestellt sein.

Nachfolgend werden die Luftfeder sowie weitere Merkmale und Vorteile anhand von Ausführungsbeispielen näher erläutert, die in den Zeichnungen schematisch dargestellt sind. Hierbei zeigen:
- Fig. 1: einen Querschnitt durch eine Luftfeder mit einem an einem Abrollkolben festgelegten Pufferelement gemäß einer ersten Ausführungsform;
- Fig. 2: einen vergrößerten Ausschnitt eines Querschnitt s durch einen Befestigungsbereich eines Abrollkolbens mit einem daran anliegenden Wulstabschnitt eines Luftfederbalgs;
- Fig. 3: einen vergrößerten Ausschnitt eines Querschnitt s durch einen Befestigungsabschnitt eines Abrollkolbens und einem Pufferelement gemäß einer ersten Ausführungsform vor dem Einsetzen des Pufferelements in den Befestigungsabschnitt;
- Fig. 4: einen vergrößerten Ausschnitt eines Querschnitt s durch einen Befestigungsbereich eines Abrollkolbens mit einem in den Befestigungsabschnitt eingesetzten Pufferelement gemäß einer ersten Ausführungsform;
- Fig. 5: eine perspektivische Ansicht eines Pufferelements gemäß einer ersten Ausführungsform;
- Fig. 6: eine perspektivische Ansicht eines Pufferelements gemäß einer ersten Ausführungsform mit einem Teilausschnitt; und

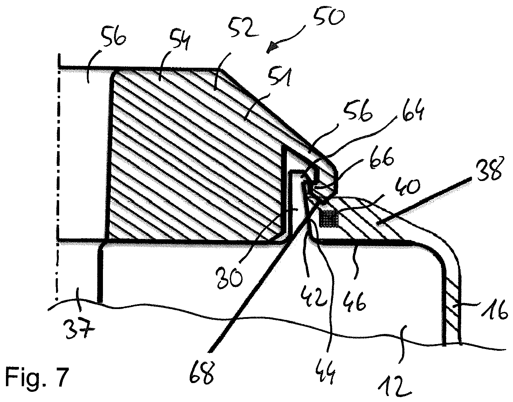

- Fig. 7: einen vergrößerten Ausschnitt eines Querschnitts durch einen Befestigungsabschnitt eines Abrollkolbens und einem darin eingesetzten Pufferelement gemäß einer zweiten Ausführungsform.

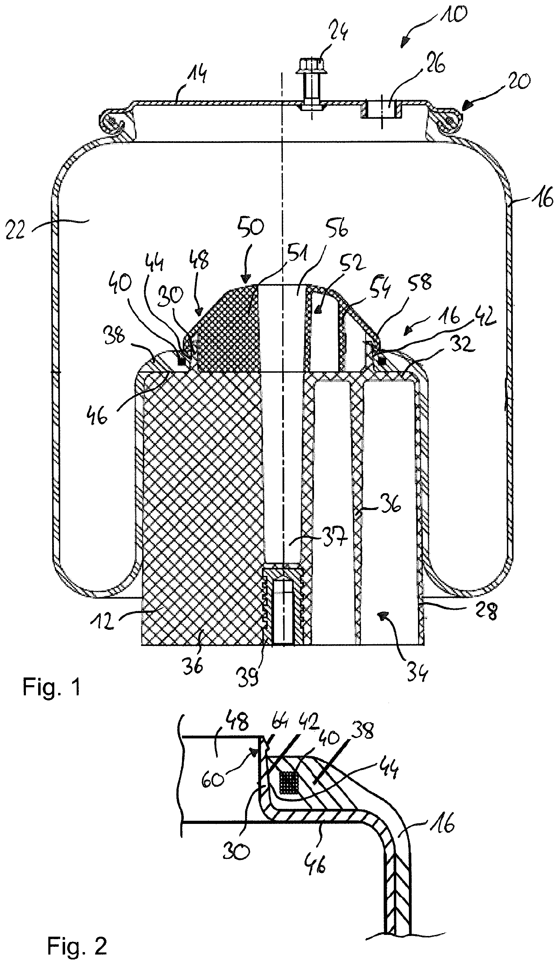

In Fig. 1 ist eine Luftfeder 10 gezeigt, die zwischen einem nicht dargestellten tragenden Teil eines Fahrzeugs, insbesondere eines Nutzfahrzeugs, und einem nicht dargestellten Fahrwerksteil, wie beispielsweise einer Fahrwerksachse eines Nutzfahrzeugs oder eines Trailers, anordenbar ist.

Die Luftfeder 10 weist einen Abrollkolben 12, ein Abschlusselement 14, einen Luftfederbalg 16 und ein Pufferelement 50 auf. Der Luftfederbalg 16 ist an einem ersten freien Ende 18 mit dem Abrollkolben 12 und an einem zweiten freien Ende 20 mit dem Abschlusselement 14 verbunden, um so einen mit Fluid, insbesondere mit Luft, gefüllten Arbeitsraum 22 zu bilden. Das Abschlusselement 14 ist als Platte ausgebildet, wobei das zweite freie Ende 20, insbesondere ein Wulstabschnitt mit Wulstkern, mit einem Randabschnitt des Abschlusselements 14 verklemmt ist. Ferner umfasst das Abschlusselement 14 Befestigungselemente 24 zur Befestigung an einem tragenden Teil eines Fahrzeugs, insbesondere eines Nutzfahrzeugs, sowie einen Anschluss 26 in Form einer Öffnung zum Einsetzen eines Einfüllstutzens, um den Arbeitsraums 22 mit einem Fluid, insbesondere Luft, zu befüllen.

Der Abrollkolben 12 ist als Hohlzylinder ausgebildet und weist eine Kolbenwand 28, einen Befestigungsabschnitt 30 und einen die Kolbenwand 28 und den Befestigungsabschnitt 30 miteinander verbindenden Schulterabschnitt 32 auf. Innerhalb der Kolbenwand 28 ist eine Versteifungsstruktur 34 angeordnet, die mehrere in äquidistanten Abständen zueinander angeordnete Versteifungsrippen 36 aufweist, die von der Kolbenwand 28 radial nach innen ragen und mit dieser stoffschlüssig verbunden sind. Die Versteifungsstruktur 34 bildet ferner ein zentrales Sackloch 37, dem gegenüberliegend eine in dem Abrollkolben eingesetzte Gewindebuchse 39 zur Befestigung des Abrollkolbens 12 an einem Fahrwerksteil zugeordnet ist. Wie in Fig. 1 ersichtlich ist, rollt der Luftfederbalg 16 an der Außenfläche der Kolbenwand 28 während des Ein- und Ausfederns ab. Der Abrollkolben 12 ist einteilig als Spritzgussteil, insbesondere Kunststoffspritzgussteil, weiterhin insbesondere aus Polyamid (PA) mit Glasfasern oder Polypropylen (PP) mit Glasfasern, hergestellt.

Das erste freie Ende 18 des Luftfederbalgs 16 weist einen Wulstabschnitt 38 mit einem eingebetteten, undehnbaren Wulstkern 40 auf. Der Befestigungsabschnitt 30 ist nach oben konisch zulaufend als Konussitz ausgebildet und dient als Klemmsitz beziehungsweise Stecksitz für den Wulstabschnitt 38, indem eine konisch geformte Dichtfläche 42 des Wulstabschnitts 38 an einer Außenseite 44 des Befestigungsabschnitts 30 dichtend anliegt. Des Weiteren liegt der Wulstabschnitt 38 mit seiner Unterseite 46 an dem Schulterabschnitt 32 an.

Wie in Fig. 1 ersichtlich ist, ist in eine von dem Befestigungsabschnitt 30 gebildete Öffnung 48 das Pufferelement 50 eingesetzt, wobei das Pufferelement 50 mittels einer Rastverbindung an dem Befestigungsabschnitt 30, insbesondere dessen Außenseite 44, festgelegt ist.

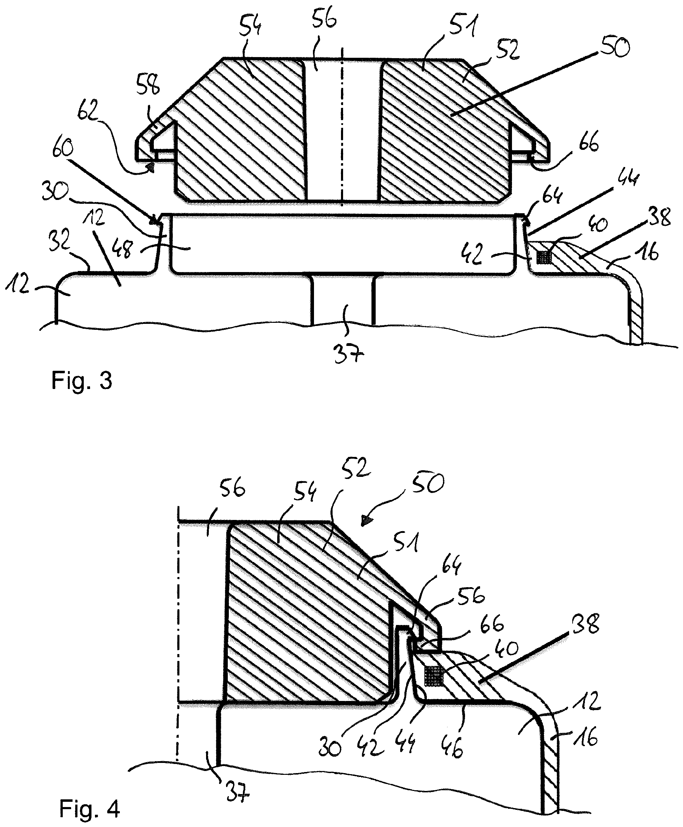

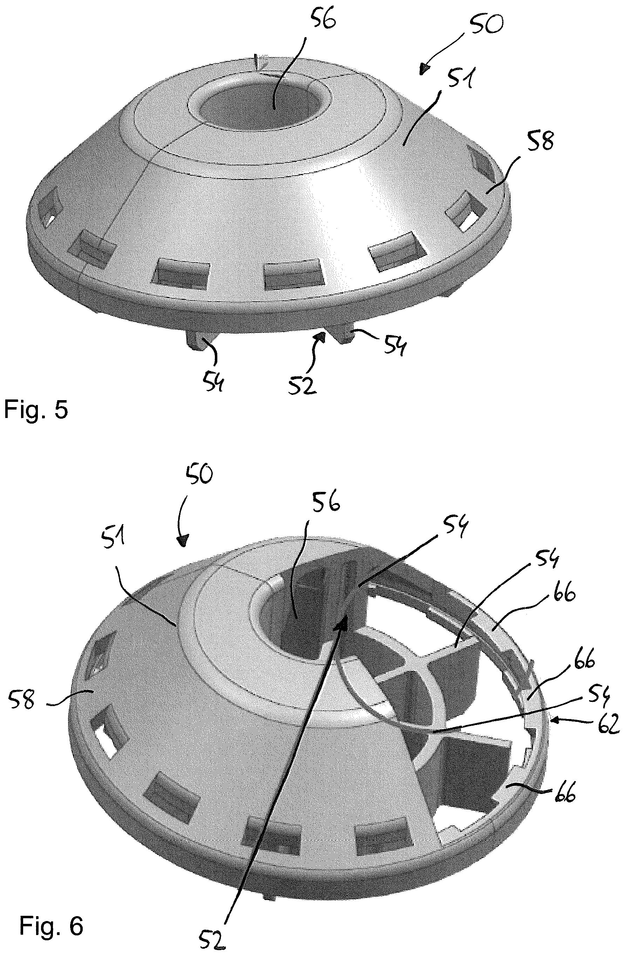

Wie die Figuren 5 und 6 zeigen, ist das Pufferelement 50 näherungsweise pilzförmig ausgebildet und weist einen hohlen Hauptkörperabschnitt 51 und einen von dem Hauptkörperabschnitt 51 abragenden Randabschnitt 58 auf. Wie ferner in den Figuren 1 und 4 ersichtlich ist, umgibt der Randschnitt 58 im eingesetzten Zustand des Pufferelementes 50 den Befestigungsabschnitt 30 außenumfangsseitig. Innerhalb des Hauptkörperabschnitts 51 ist eine Versteifungseinrichtung 52 angeordnet, die eine Vielzahl an von der Innenwand des Hauptkörperabschnitts abragende Rippen 54 aufweist, wie in Fig. 6 ersichtlich ist. Die Versteifungseinrichtung 52 bildet einen zentralen Durchgang 56, der im eingesetzten Zustand des Pufferelementes 50 mit dem Sackloch 37 fluchtet. Das Pufferelement 50 ist einteilig als Spritzgussteil, insbesondere Kunststoffspritzgussteil aus einem Verbundwerkstoff oder einem elastomeren Werkstoff hergestellt.

Um das Pufferelement 50 an dem Befestigungsabschnitt 30 mittels einer Rastverbindung zu befestigen, weist der Befestigungsabschnitt 30 eine erste Rasteinrichtung 60 auf, die mit einer am Pufferelement 50 ausgebildeten zweiten Rasteinrichtung 62 zusammenwirkt. Wie insbesondere in den Figuren 2 bis 4 ersichtlich ist, weist die erste Rasteinrichtung 60 eine von dem Befestigungsabschnitt 30 radial abragende, insbesondere umlaufende, Rastnase 64 auf.

Wie die Figuren 3, 4 und 6 zeigen, weist die zweite Rasteinrichtung 62 eine Vielzahl an von dem Randabschnitt 58 radial einwärts abragende Vorsprünge 66 auf, die in äquidistanten Abständen an einem Innenumfang des Randabschnitts 58 angeordnet sind.

Beim Einsetzen des Pufferelements 50 in den Befestigungsabschnitt 30, insbesondere in die Öffnung 48, hintergreift die Rastnase 64 die Vorsprünge 66, so dass das Pufferelement 50 an dem Abrollkolben 12, insbesondere an der Außenseite 44 des Befestigungsabschnitts 30, festgelegt ist. Darüber hinaus liegt der Randabschnitt 58 an dem Wulstabschnitt 38 an, so dass ein Abziehen des Wulstabschnitts 38 von dem Abrollkolben 12, insbesondere dem Befestigungsabschnitt 30, verhindert wird.

In Fig. 6 ist eine zweite Ausführungsform des Pufferelements 50 gezeigt, die sich von der ersten Ausführungsform dadurch unterscheidet, dass das freie Ende des Randabschnitts 58 eine Erhebung 68 aufweist, die für einen Toleranzausgleich des Pufferelements 50 sorgt. Die Erhebung 68 ist dabei vorliegend als eine spitze Kontur ausgebildet.

Da die Außenseite 44 des Befestigungsabschnitts 30 zur Befestigung des Pufferelements 50 genutzt wird, ist keine weitere Befestigungskontur am Abrollkolben 12 erforderlich. Dadurch kann der Abrollkolben 12 einfach und kostengünstig, insbesondere im Spritzgußverfahren, hergestellt werden. Zudem ermöglicht die Rastverbindung eine einfache und sichere Befestigung des Pufferelements 50 an dem Abrollkolben 12. Darüber hinaus verhindert das Pufferelement 50, insbesondere dessen Randabschnitt 58, ein Abziehen des Wulstabschnitts 38 von dem Befestigungsabschnitt 30.

### Bezugszeichenliste

- 10: Luftfeder
- 12: Abrollkolben
- 14: Abschlusselement
- 16: Luftfederbalg
- 18: erstes freies Ende
- 20: zweites freies Ende
- 22: Arbeitsraum
- 24: Befestigungselement
- 26: Anschluss
- 28: Kolbenwand
- 30: Befestigungsabschnitt
- 32: Schulterabschnitt
- 34: Versteifungsstruktur
- 36: Versteifungsrippen
- 37: Sackloch
- 38: Wulstabschnitt
- 39: Gewindebuchse
- 40: Wulstkern
- 42: Dichtfläche
- 44: Außenseite
- 46: Unterseite
- 48: Öffnung
- 50: Pufferelement
- 51: Hauptkörperabschnitt
- 52: Versteifungseinrichtung
- 54: Rippe
- 56: Durchgang
- 58: Randabschnitt
- 60: erste Rasteinrichtung
- 62: zweite Rasteinrichtung
- 64: Rastnase
- 66: Vorsprung
- 68: Erhebung

## Patentansprüche

1. Luftfeder (10) aufweisend einen Abrollkolben (12), einen Luftfederbalg (16) mit wenigstens einem endseitigen Wulstabschnitt (38) und ein Pufferelement (50), wobei der Abrollkolben (12) einen Befestigungsabschnitt (30) aufweist, wobei der Wulstabschnitt (38) an einer Außenseite (44) des Befestigungsabschnitts (30) anliegt, **dadurch gekennzeichnet, dass** das Pufferelement (50) mittels einer Rastverbindung an der Außenseite (44) des Befestigungsabschnitts (30) festgelegt ist.

2. Luftfeder (10) nach Anspruch 1, **dadurch gekennzeichnet, dass** der Befestigungsabschnitt (30) eine erste Rasteinrichtung (60) aufweist, die mit einer am Pufferelement (50) ausgebildeten zweiten Rasteinrichtung (62) zusammenwirkt.

3. Luftfeder (10) nach Anspruch 2, **dadurch gekennzeichnet, dass** die erste Rasteinrichtung (60) wenigstens eine von dem Befestigungsabschnitt (30) radial abragende Rastnase (64) aufweist.

4. Luftfeder (10) nach Anspruch 2 oder 3, **dadurch gekennzeichnet, dass** die zweite Rasteinrichtung (62) wenigstens einen Vorsprung (66) aufweist, der mit der ersten Rasteinrichtung (60) zusammenwirkt.

5. Luftfeder (10) nach Anspruch 4, **dadurch gekennzeichnet, dass** die zweite Rasteinrichtung (62) eine Vielzahl an Vorsprüngen (66) aufweist, die in äquidistanten Abständen an dem Pufferelement (50) angeordnet sind.

6. Luftfeder (10) nach einem der vorhergehenden Ansprüche, **dadurch gekennzeichnet, dass** ein Abschnitt des Pufferelements (50) im festgelegten Zustand an dem Wulstabschnitt (38) anliegt.

7. Luftfeder (10) nach einem der vorhergehenden Ansprüche, **dadurch gekennzeichnet, dass** das Pufferelement (50) in eine von dem Befestigungsabschnitt (30) gebildete Öffnung (48) eingesetzt ist, wobei ein Randabschnitt (58) des Pufferelementes (50) den Befestigungsabschnitt (30) außenumfangsseitig umgibt.

8. Luftfeder (10) nach Anspruch 7, **dadurch gekennzeichnet, dass** der Randabschnitt (58) die zweite Rasteinrichtung (62) aufweist.

9. Luftfeder (10) nach Anspruch 7 oder 8, **dadurch gekennzeichnet, dass** der Randabschnitt (58) an seinem freien Ende eine Erhebung (68) aufweist.

10. Luftfeder (10) nach einem der vorhergehenden Ansprüche, **dadurch gekennzeichnet, dass** der Befestigungsabschnitt (30) als Konussitz ausgebildet ist.

11. Luftfeder (10) nach einem der vorhergehenden Ansprüche, **dadurch gekennzeichnet, dass** der Wulstabschnitt (38) einen Wulstkern (40) und eine konische Dichtfläche aufweist, wobei die konische Dichtfläche an der Außenseite (44) des Befestigungsabschnitts (30) dichtend anliegt.

12. Luftfeder (10) nach einem der vorhergehenden Ansprüche, **dadurch gekennzeichnet, dass** der Abrollkolben (12) einen zu dem Befestigungsabschnitt (30) senkrecht verlaufenden Schulterabschnitt (32) aufweist, wobei der Wulstabschnitt (38) an dem Schulterabschnitt (32) anliegt.

13. Luftfeder (10) nach einem der vorhergehenden Ansprüche, **dadurch gekennzeichnet, dass** der Abrollkolben (12) einteilig ausgebildet ist und eine Versteifungsstruktur (52) aufweist.

14. Luftfeder (10) nach einem der vorhergehenden Ansprüche, **dadurch gekennzeichnet, dass** der Abrollkolben (12) als Spritzgussteil hergestellt ist.

15. Luftfeder (10) nach einem der vorhergehenden Ansprüche, **dadurch gekennzeichnet, dass** das Pufferelement (50) als Spritzgussteil hergestellt ist.
